# EUROPEAN PATENT APPLICATION

(11) **EP 4 631 709 A1**
(43) Date of publication of application: **15.10.2025**
(21) Application number: 25169836.1
(22) Date of filing: 10.04.2025
(51) Int. Cl.: B31B 50/00, B26D 5/00, B31B 50/04, B31B 50/06, B31B 50/07, B31B 50/20, B31B 50/25, B31B 50/98, B31B 100/00, B23K 26/38, B23K 26/402

(54) **APPARATUS AND METHOD FOR CARRYING OUT SEQUENTIAL CREASING AND LASER CUTTING ON A SHEET MATERIAL**

(30) Priority: 11.04.2024 EP 24169819
(71) Applicant: SEI S.p.A., 24035 Curno (BG) (IT)
(72) Inventor: FUSTINONI, Ettore, 24035 Curno (BG) (IT)
(74) Representative: Gislon, Gabriele

(57) **Abstract**

In an apparatus (1) and a method for creasing and cutting sheets of material for packaging or display, or corrugated carton structure material such as cardboard and corrugated cardboard, a sheet Sₓ to be processed is fed sequentially through an optical station (100), a creasing module (200) and a laser cutting module (300) for being sequentially creased and cut, and wherein the creasing and cutting status work profiles are input by a programming logic controller (PLC) by way of a Job Processor, and wherein the speeds of the conveyor belts that convey the sheets, are adjusted automatically by a processing unit based on parameters of the creasing and cutting operations.

## Description

The present invention relates to the technical field of processing sheets of a material for packaging, displays and in general carton structures such as cardboard and corrugated cardboard. More particularly, the invention relates to an apparatus for carrying out sequential creasing and laser cutting on a cardboard sheet or a paperboard sheet and similar materials, particularly corrugated cardboard and similarly rigid or stiff material, and to a related method.

Packaging, in particular cardboard boxes, is used in a wide range of product sectors, from food to entertainment, from mechanics to furnishings. In fact, packaging protects the product contained therein, facilitating its transport and preserving its integrity.

With particular reference to cardboard boxes, the process for their production involves two fundamental steps, namely cutting the desired shape of a box on a sheet of cardboard and creasing said sheet, which consists in producing one or more grooves or fold lines on the rigid (stiff) sheet of cardboard to facilitate folding of the sheet of cardboard, thereby obtaining the box of the desired shape. Creasing substantially consists in a "yielding" of the fibres of the stiff material of the cardboard, so that they can better withstand the folding operation. Creasing is generally carried out before cutting.

The same technology applies also to cardboard sheets for obtaining different products, such as cardboard displays, corrugated carton structures and the like.

The current technologies for the production of cardboard and corrugated cardboard packaging and displays (exhibitors) are mainly based on cutting and creasing processes carried out using traditional dies, both flat and rotary. These systems offer high production speeds, but they have a limitation due to the lack of flexibility associated with the use of the "die" tool. This does not allow for easily customized production, as die replacement is required for each job change, resulting in machine stops and setup times.

Dies of the known art are commonly produced by specialized external companies, leading to logistic complications and delays in the production process. Additionally, the presence of a mechanical tool limits the possibility of complex and customized processes due to direct contact during processing.

In parallel, there is a strong need for highly customized "on-demand" productions, which require the ability to adapt the dimensions of packaging and displays to specific merchandise. However, production batches are often small and do not fit well with traditional technologies that require producing a creasing or cutting dye.

The introduction of large-format digital printers, with the intrinsic possibility of extreme customization, is further driving the demand for digital cutting and creasing systems. Although traditional plotter systems equipped with mechanical tools offer this possibility, productivity remains limited compared to market demands.

To date, a cutting process by means of a laser apparatus is known for cutting sheet material in the form of cardboard or corrugated cardboard, but this laser cutting process is carried out on specialised machines or apparatus, after creasing on a different dedicated machine, with no possibility of carrying out a continuous process.

There is therefore the need to provide an "all-in-one" apparatus for performing consequential creasing and cutting, in order to overcome all the disadvantages related to low productivity, unnecessary transportation, high energy consumption, scrap optimization, production waste and so on.

An aim of the present invention is to overcome the drawbacks of the known apparatus and methods for creasing and cutting sheets of material like cardboard and similar.

In particular, an object of the invention is to provide an "all-in-one" apparatus for sequentially creasing and cutting sheets of packaging, display or corrugated carton structures material such as cardboard and the like, with no downtime between the two processes.

Another object of the invention is to provide such an apparatus provided with an automatic control of the status of work, in order to have the highest precision operation.

Still another object of the invention is to provide "on demand" production, with fully digitalized processing, such that every sheet can be processed according to different specifications according to the actual demand, or requirements of the final product, such as the cutting pattern, length and shape.

A further object of the invention is to provide a related method for sequentially creasing and cutting sheets of packaging, display or corrugated carton structures material such as cardboard and the like.

These and other objects are achieved by the apparatus according to the invention having the features of the annexed independent claim 1 and by a related method according to claim 13. The invention also relates to a computer program according to claim 17.

Advantageous embodiments of the invention are disclosed in the dependent claims.

Substantially, the invention relates to an apparatus for creasing and cutting sheets of packaging, display or corrugated carton structure material such as cardboard and the like, comprising: an optical station provided with a conveyor belt (110) apt to receive a sheet to be processed and to feed it along the optical station, the optical station also comprising an optical register designed to acquire parameters of the received sheet such as thickness of the sheet, creasing pattern, laser cutting pattern, X/Y offset positions, rotation angle, print deformations, and the like; a creasing module provided downstream of the optical station for carrying out creasing on the sheet, the creasing module being provided with a creasing controller receiving the parameters acquired at the optical station and a creasing conveyor belt apt to receive the sheet from the optical station conveyor belt and to feed it along the creasing module; a laser cutting module provided downstream of the creasing module for carrying out sequential laser cutting on the sheet exiting from the creasing module, the laser cutting module being provided with a laser cutting controller receiving the parameters acquired at the optical station and a laser cutting conveyor belt apt to receive the sheet from the creasing module and feed it along the creasing module; a programmable logic controller (PLC) controlling the operations of the optical station, creasing module and cutting module; and, a processing unit operatively connected to the PLC controller.

The processing unit receives as input a set of data including parameters related to creasing and cutting operations and the values of speed of the optical station conveyor belt, the creasing conveyor belt and the cutting conveyor belt, wherein said processing unit processes the input data and carries out a real-time control on the optical station conveyor belt, creasing conveyor belt and cutting conveyor belt speeds as a function of the parameters of creasing and laser cutting operations both at the creasing module and at the laser cutting module, in order to control the speeds of the conveyor belts and in a preferred embodiment, to synchronize the conveyors at the same speed because the conveyor belt speeds adapt to the parameters related to least the creasing and cutting operations, to optimize productivity.

Further features of the invention will appear clearer from the following detailed description, referring to a purely illustrative and therefore not limiting embodiment, illustrated in the annexed drawings, wherein:
- Figure 1 is a three-dimensional rendering representation of the main modules of an apparatus for creasing and laser-cutting sheets of cardboard and the like according to the present invention;
- Figure 2 is a schematic representation of the main modules of the creasing and laser cutting apparatus;
- Figure 3 is schematic conceptual representation of the core functioning of the apparatus according to the invention; and
- Figure 4 is an extended conceptual representation of the apparatus according to the invention.

With reference to these figures, an apparatus for sequential and/or simultaneous execution of creasing and cutting on sheets of paper, cardboard and similar will now be described in more detail.

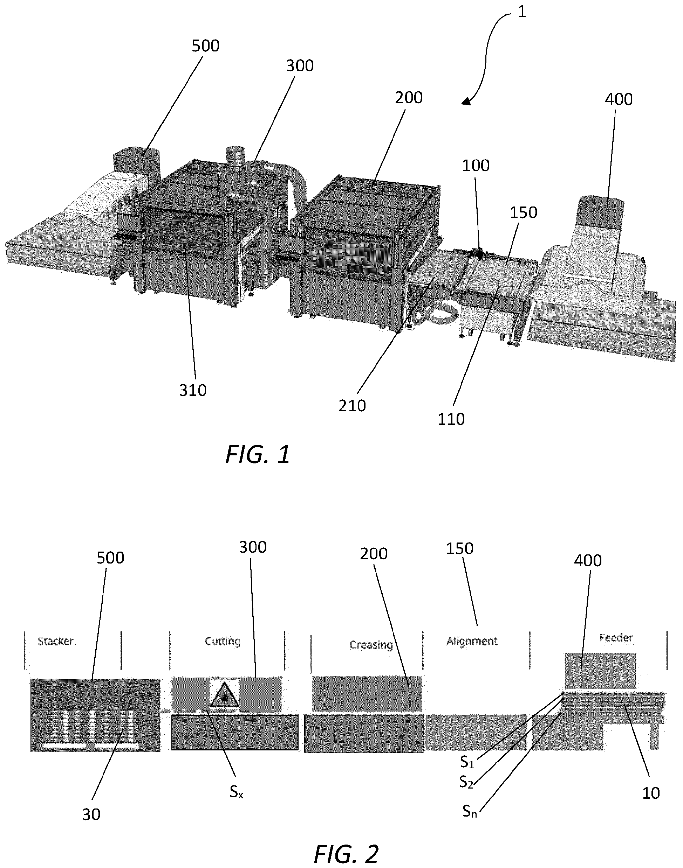

Figure 1 is a three-dimensional rendering representation of such apparatus, globally referenced by number 1, in which the main modules constituting it are shown, while Figure 2 is a schematic representation. Key components of the apparatus 1 are the creasing module 200 and the laser cutting module 300, that, placed in close sequence, enable the pursued benefits to be achieved by the subject invention.

Advantageously, a feeder module 400 is provided to pick up sheets S1, S2, ..., Sn from a stack of sheets 10 and load them individually to the creasing module 200. Similarly, a stacker module 500 is provided to collect in a stack 30 the processed sheets coming out from the laser cutting module 300.

It should be noted that the apparatus 1 works seamlessly: the feeder module 400 continuously supplies sheets S1, S2, ..., Sn to the creasing module 200 and the stacker module 500 continuously collects the treated sheets into a sheet stack.

In a conventional way, the creasing module 200 is intended to receive a plurality of sheets to be processed and to carry out creasing according to pre-loaded instructions. For this purpose, the creasing module is operatively connected to a programmable logic controller (PLC), that controls its operation. A specific apparatus Job Controller, in communication with the PLC, can also be provided for sending instructions to the creasing and laser cutting modules, e,g, creasing instructions to the creasing module and laser cutting instructions to the laser cutting module. The features of such creasing module are known per se in the art and to the skilled person and advantageously include an overhead creasing mechanism that creases the sheets S1, S2, ...Sn from above as the sheets S1, S2, ...Sn lie essentially flat as they travel along on the conveyor belt. The creasing mechanism preferably includes a plotter capable of movement along two orthogonal axes, and a wheel or other rolling member that applies pressure to the sheet to form creases in the sheet, typically one or more grooves or fold lines on the rigid (stiff) sheet of cardboard to facilitate folding of the sheet of cardboard. The plotter may preferably provide the wheel or other rolling member motion along a plane.

The motion of the plotter along the two axes is preferably controlled by respective axis motors. In a preferred embodiment there is one pressure creasing device mounted on a support movable along one bar located transverse to the length of the module (with respect to the machine direction). The bar is mounted slidably on guides provided at the side of the creasing module so that the bar can in turn be moved with the creasing device, longitudinally along the the creasing module 200.

In other embodiments, other mechanical and other devices suitable for providing creases on a sheet, may be used and other modes of translational movement may also be used. In any case, known creasing devices consisting in or comprising cylinders carrying creasing profiles, such as those disclosed in US 2016/0332261A1 are excluded from the scope of the present invention.

In a standard way, in fact, the creasing module 200 has a conveyor belt 210 configured to receive the sheets S1, S2, ..., Sn to be creased. The conveyor belt 210 moves the sheets through module 200, where creasing takes place. As they exit creasing module 200, the sheets on conveyor belt 210 are fed to the laser module 300 for cutting operations.

The laser cutting module 300 may also be a machine conventionally known per se in the industry. Preferably laser cutting module 300 includes an overhead laser device adapted to direct a laser downward toward the sheets S1, S2, ...Sn as the sheets S2, S2, ...Sn lie essentially flat as they travel along on the conveyor belt. The laser device is moveable by means of a plotter capable of movement along two orthogonal axes and preferably there are provided two bars that are moved by means of four linear motors, i.e. one motor is located at each extremity of a same axis. In one preferred embodiment, there is one laser device mounted on a support located at the intersection of said two bars.

In a preferred embodiment laser module 300 includes a laser device mounted on a plotter 301 capable of movement along two orthogonal axes and creasing module 200 includes a creasing device mounted on a plotter 201 capable of movement along two orthogonal axes, preferably said creasing device includes a rolling member suitable to apply pressure to the sheet present in the creasing module 200. The combination of creasing and cutting stations both using a plotter results in the advantage of total flexibility and high production speeds. The time required to change from production of one product to another is in fact very reduced.

Other modes of translational movement may be used in other embodiments.

In a preferred embodiment the laser cutting module has a working support for laser cutting and/or marking operation, comprising
- at least one vacuum chamber connected to at least one vacuum element
- a honeycomb structure comprising a plurality of cells, which is arranged spaced from the vacuum chamber, and
- an intermediate depression chamber which is defined between said honeycomb structure and said vacuum chamber;
wherein the lower surface of said intermediate depression chamber has a plurality of suction holes which fluidically connect said vacuum chamber with the cells of said honeycomb structure.

The cutting or working support is object of a co-pending application in the name of the present Applicant, having title "Working support for laser cutting and conveyor belt comprising working support".

Similar to the creasing module 200, the laser module 300 is operatively connected to the PLC and provides a respective conveyor belt 310 for advancing the sheets to be processed.

In the apparatus according to the invention, in operation, conveyor belt 310 is intended to continuously receive sheets exiting the creasing module 200 and advance them through laser cutting station 300, where they will be subjected to cutting operations according to Job Controller instructions. At the exit from laser module 300, the sheets are almost completely processed and they can be conveyed to an appropriate stacker module 500.

Conventionally, the creasing module 200 and the laser cutting module 300 have respective encoders and respective control units or controllers in communication with the PLC.

In order for the process to be carried out optimally and with the highest precision, also in view of the fact that sheets of material pass through two or more different processing stations, suitable adhesion of the sheets to the conveyor belts must be ensured.

To this end, advantageously, all the conveyors in apparatus 1 may advantageously be vacuum conveyors, which, by creating a vacuum between the sheet material and the belt, avoids slippage and allows the sheet to remain held in its initial loading position, with the advantages that the following process will be performed with the highest accuracy.

In addition to the modules so far described, the apparatus 1 features an optical station 100 provided upstream of the creasing module 200. In Figures 1 and 2, the optical station 100 is shown applied to a connecting module 150 provided between feeder module 400 and creasing module 200. Clearly, the depiction in Figure 1 should not be understood in a limiting way, and other embodiments and arrangements of the optical station 100 can be envisaged, subject to the provision of a conveyor belt 110 intended to receive a sheet Sx to be processed and to transport it to the conveyor belt 210 of the creasing module 200. Just as the other belts, advantageously conveyor belt 110 is a vacuum belt conveyor.

The optical station 100 includes at least one optical register to detect the position and the features of the sheet to be processed. The optical register can be made up of a vision system, such as a linear camera or a matrix camera, an optical scanner or optical sensors able to detect the sheet and/or the printed graphic position on it, and the like. The optical register can be designed to acquire parameters such as sheet thickness, X/Y offset positions, rotation angle and, in case, print deformation, and so on.

The optical station is operatively connected to the PLC and to the controllers of creasing module 200 and of the laser cutting module 300, to which it transmits the acquired parameters related to the features of the loaded sheets. Such parameters are needed to determine the exact position of the sheet on which creasing and cutting will be carried out.

Advantageously, the optical station 100 also features a detection system such an optical reader or scanner for detecting machine-readable media such as QR codes, barcodes and the like.

In an advantageous embodiment, the detection system is a QR code scanner apt to scan a QR code embedded in one or more of the sheets received at the optical station. The scanned code is associated with detailed workflow instructions to be performed on the sheet and it is transmitted by the optical station 100 to the apparatus Job Controller, which in turn can be connected to the PLC.

More specifically, the instructions can be previously stored in a job library (also referred to as "Hot folder" in the drawings) to which the Job Controller has access. The library may consist, for example, of a plurality of files, such as .pdf or scripts containing lines of instructions code with which the Job Controller can instruct the creasing and laser controllers to carry out the desired processing.

With no limitation, the QR code can be embedded in all the sheets or the in first sheet of the stack 10 of sheets to be processed, and it can be printed together with the graphics into a scraping part of the sheet. Of course, other similar machine-readable media and scanner can be used, including both currently known systems and systems that will be developed in the future.

Apparatus 1 according to the invention also includes a processing unit P operatively connected with the PLC controller and specifically configured to control and manage the entire working process of a stack of sheets. In some embodiments, the processing unit P can be integrated into the PLC controller.

In some embodiments, with laser power and the dynamic capacity of the axis motors of the creasing and laser cutting stations kept constant, the speed of the axis motors in the creasing and laser cutting modules is a function of the material thickness of the sheets S1, S2, ...Sn and the length of the creasing and laser cutting profiles. The optimal working parameters of the creasing and laser cutting operations may be determined in this manner. In turn, the processing unit connected to the PLC controller then controls the speeds of the conveyor belts to optimally be synchronized, based on the parameters of the creasing and laser cutting operations.

One of the requirements for the correct functioning of the apparatus is that the feeding of the sheets takes place at an almost constant speed along all the processing stations. Since the apparatus comprises several separate modules equipped with respective conveyor belts, this implies that the conveyors must maintain essentially the same speed throughout the whole, i.e. they must be synchronized at the same speed. Advantageously, the same speed of the conveyors makes it possible that a rigid sheet exiting from one belt (e.g. of the creasing module) is directly received by the following belt (e.g. of the laser cutting module) without the need of any manual or machine transfer of the sheet. In this way the position of the sheet is always known and a portion of a long sheet of material can be laser cut in the laser module while another portion of the same sheet is creased in the creasing module.

The goal of the processing unit is precisely to control the speed of the conveyor belts in order to maintain a constant speed, for achieving the most accurate, efficient and optimal processing. Since creasing and cutting operations generally have different processing times, the processing unit, in order to keep the speed constant, is configured to adjust the parameters of the two processing stages, in particular, the speeds of the conveyor belts, by checking, inter alia, the real-time status of work.

Essentially, the processing unit performs as a feedback control unit of a system in which the measured speeds of the conveyor belts are the parameters under control (outputs) of the processing unit and the inputs, i.e., the parameters which are to be adjusted, are the parameters related to the creasing and cutting operations.

Basically, if one of the operations takes less time than the other, as is often the case with creasing, which generally requires less actions than laser cutting, the processing unit will process in real-time the operations parameters and will make an adjustment to the speeds of the conveyor belts to synchronize the conveyor belts, that is, make the speeds of the conveyor belts, and thus the sheet advancing speed, consistent. In embodiments, the speed of a conveyor belt may be reduced to zero, i.e. the belt is stopped, to allow the operation of creasing and/or of laser cutting to be completed on the sheet that is being treated before moving said sheet outside of the working area of the relevant creasing module and/or laser cutting module of the invention system.

The processing unit therefore receives as input a range of data, including conveyor belt speeds, which are the measures under control, and a number of parameters from the laser and creasing controllers and encoders, as well as parameters related to the instructions to be executed by the machines, which were previously loaded and retrieved by the Job Controller, for example by scanning a QR code on the sheet, as described above. Based on the elaboration of the input data and the control measures, it then evaluates the adjusted "profile of operation" of creasing and cutting modules and sends instructions to control the conveyor belt speeds in the creasing and laser cutting modules.

With such an apparatus 1 provided with a dedicated processing unit, it is possible to perform efficiently sequential creasing and laser cutting on a sheet of material destined to packaging applications and the like. Moreover, the apparatus 1 is particularly advantageous when the sheet to be processed is relatively long and it is required to simultaneously carry out creasing and cutting on the same sheet.

The following are exemplary outline specifications of an apparatus 1 according to a possible embodiment of the invention:
Material: corrugated cardboard, type: B, C, E, EB, BC, FE, EE, max thickness 6 mm (up to 8 mm double wave)
Maximum working format: 1600x2400 mm
Static working area: 1600x1500 mm
Maximum conveyor speed: 25 m/min
Axis speed: up to 5 m/s,
Typical axis speed: 500-3000 mm/s (laser), 1500 mm/s (creasing)
Max Acceleration: 8g (laser), 4g (creasing)
Register mode: optical based on scanner camera and notch color sensor
Average production throughput: about 500 m2/h (or 1200 boxes/h)
Feeder: max pile high: 850 mm, max speed: 6 sh/min, safety protection with laser scanner.

It should be noted that the maximum conveyor speed can be increased, for example by increasing the laser power, or by providing further laser cut modules or creasing modules. In fact, one of the advantages of having the creasing modules 200 provided with a dedicated creasing conveyor belt 210, and the laser cutting modules 300 provided with a dedicated laser cutting conveyor belt 310 is that it enables for a modular apparatus 1, wherein one or more modules can be arranged in line, with dedicated conveyor belts.

The speeds of the conveyors 210, 310 are desirably set according to the optimal working parameters of the one or more creasing modules 210 and of the one or more laser cutting modules 310, such that the conveyors of all the modules work at the same speed.

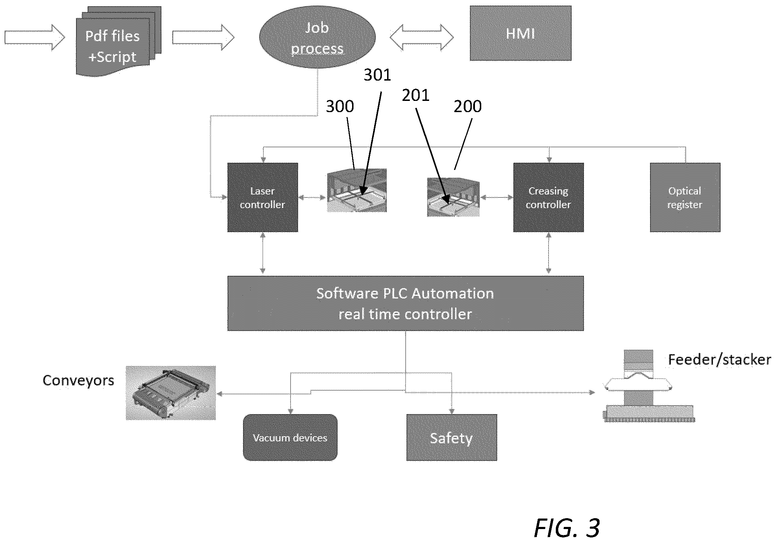

Figure 3 is a conceptual schematic representation of the functioning of an apparatus for creasing and cutting provided with a processing unit for controlling in real-time the status of work.

The figure shows the execution of a Job Process, that can be initiated in a variety of ways. As discussed above, the Job Process may start by importing a list of instructions that can be associated to a QR code scanned at the beginning of the process. Alternatively, or additionally, instructions can be manually loaded through a Human Machine Interface (HMI).

An optical register of the optical station 100 acquires data related to the sheet to be processed (including position and possible deformations) and sends the data to the Job Controller, which, taking into account the data acquired from the optical station, sends to the creasing controller and to the laser cutting controller the instructions for executing the Job Process.

The processing unit, operatively connected to the PLC, checks the real-time status of work as well as the conveyor speeds and actively utilizes the received value to control and adjust the conveyor belt speeds in view of the working parameters of the creasing and laser cutting modules and the measured speeds of the conveyor belts. Thus, if the real status working advancement of the creasing or of the laser cutting process of an element that is being treated is such that the speed of the relevant belt is too high, said speed is reduced and if necessary is brought to zero, whereby the conveyor belt is stopped until the required creasing or cutting operation is completed.

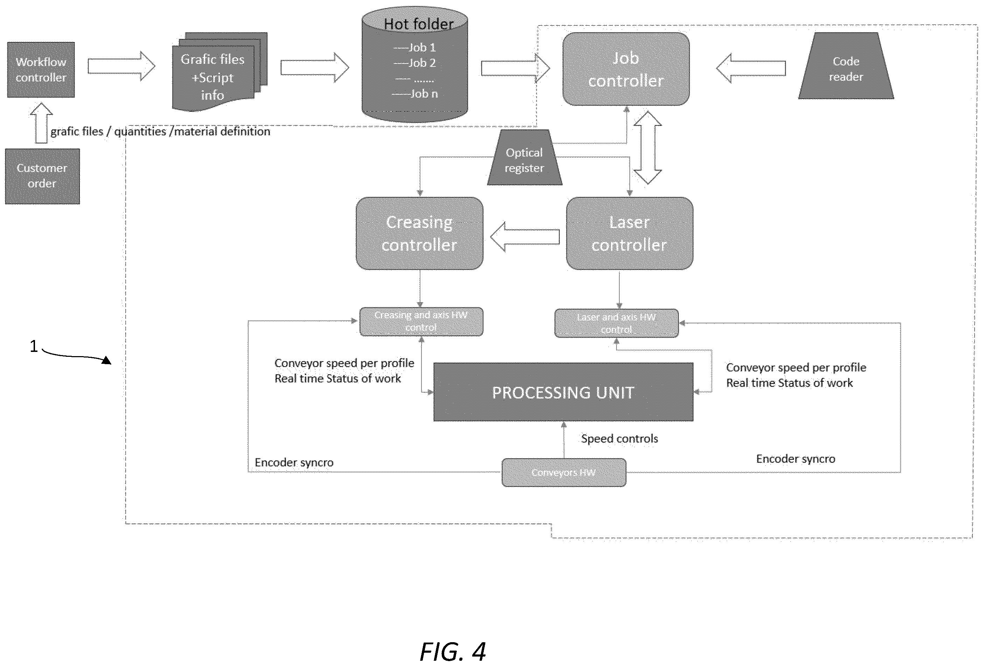

The present invention also relates to a method and process, which will be described in particular with reference to fig. 4, for carrying out sequential creasing and laser cutting on a sheet of cardboard or the like involving a creasing module (200) and laser cutting module (300) provided downstream of the creasing module. Conventionally, the creasing module (200) and the laser cutting module (300) are separate machines provided with corresponding belt conveyors (210, 310) for moving the sheets to be processed.

The conveyor belts in the present invention are located adjacent to each other and are aligned to allow a cardboard sheet exiting and protruding from the first belt to reach the initial area of the second belt so that it is held by the second belt and can be transferred from one belt to the subsequent other belt. Advantageously the conveyor belts are co-planar and the sheets S1, S2,...Sn, translate along a plane and are processed from above in both the creasing and laser cutting operations that perform the creasing and laser cutting operations along the plane.

In a digitalized process according to the present invention, a customer sends the order of a number of packaging, displays or carton structures, made up of a specific paperboard, cardboard and particularly corrugated cardboard material and with a defined graphic.

A commercial RIP software creates execution graphic files for printers and vector files of cutting and creasing. A workflow software controller creates sequences of jobs (e.g. "manifest" files containing graphic, quantities, support, identifier, etc). In this context, a Job is to be intended as the sequence of processing steps to be executed in order to perform creasing and cut on a number of carton sheets including the pattern or profile of the creasing and cutting.

The processing steps or workflow instructions can be saved in a file that can be a human readable document (e.g. pdf) or a file containing scripts for running the machines involved in the process. In this way, a sequence of Jobs is deployed as a file in a digital library, also known as a Hot Folder. An apparatus Job Controller, operatively connected to a PLC controller, can store the library in a memory or it can otherwise be associated thereto.

Advantageously, before loading the files in the library, they are also associated with a unique ID code, such that said files are loaded and the corresponding instructions are executed upon the retrieval of such ID code.

In a preferred embodiment, the unique ID code is associated to a non-transitory or other machine-readable media (e.g. QR-code and the like), which is embedded in the sheets to be processed. The ID code is usually printed together with the graphics into a scraping part of the sheet.

The actual Job Process begins when the Job Controller receives the workflow instructions. In a typical embodiment, every sheet is then identified and recognized by reading the ID code by means of a code reader provided at optical station 100, by scanning and acquiring the code embedded in a sheet to be processed coming from a feeder module 400, before to be submitted to a creasing module. The optical station 100 is provided with a conveyor belt 110 for feeding the sheets to the working modules.

Basically, as above, this code uniquely identifies the processing instructions, including the execution geometry as well as laser and creasing process parameters. The Job Controller matches the read code with the job stored in the memory, loads the instructions and sends them to the controllers of the creasing module and of the laser cutting module. In case there is any code identification, the apparatus executes jobs in the predefined sequence (ex. #n1 sheet of Job#1, then #n2 sheets of Job 2, etc.)

The optical station 100 includes an optical register which can be a linear camera, or a matrix camera, or an optical scanner, or optical sensors able to detect the sheet and/or the printed graphic position on it, or the like. The optical register acquires data related to the input sheet such as X/Y offset positions, rotation angle and, in case, print deformation, etc.

This data is extremely important, since the correct execution of the creasing and cutting processes can be carried out only knowing exactly the position and the conditions in which the sheet is loaded from the feeder module. In particular, two aspects are evaluated: if the sheets are rotated with respect to a predefined reference position (offset) and the possibility to have graphic with a random positioning and inclination on the carton sheet.

Laser controller and creasing controller receive from optical register module - also through Job Controller - the data relative to the sheet / print rotation and offset. They also receive from the Job Controller the ID of the job (in case it was previously preloaded in the memory of the Creasing/Laser and Axis HW controls) or the job itself (geometry and laser/creasing parameters).

The laser and creasing controllers divide the sheet job in a sequence of profiles and prepare and send the machine instructions of a sequence of profiles and machine parameters per sheet. They also send to creasing and laser hardware (HW) controls the data of rotation and offset per sheet.

In addition, laser and creasing HW controllers calculate the maximum speed of the conveyor per each profile and send it to the PLC controller. They also send status of work and advancing process in real time.

This data is received also by a processing unit which is operatively connected to the PLC. The primary scope of the processing unit is to control that all conveyors are synchronized and move at same speed.

It should be noted that during processing, the speed of the conveyors can be controlled, i.e. varied, in particular increased or decreased in real time, according to the process parameters. In other words, the speed of the conveyors adapts to the processing parameters of the creasing and laser cutting operations such as the speed of the creasing and laser cutting operations, due to the processing unit. This results in the advantage of being able to change the production in a very flexible way, with substantially no lost time when switching from a first product having a first set of working parameters to a second product having a different set of working parameters e.g. a different thickness and different pattern of creasing and cutting.

By receiving maximum speed allowed per profile from each element (feeder, laser plotter, creasing plotter, stacker) the system, in particular, the processing unit, drives conveyor at the minimum of the maximum speeds received.

Specifically, the processing unit sets the speeds of the conveyors 110, 210, 310 according to the optimal working parameters of creasing module 210 and laser cutting module 310 . By sending the optimal parameters of the creasing and laser cutting operations to the processing unit, the processes are executed by controlling in real time the speeds of the conveyors, laser, axis, tools, and so on because the processing unit uses the parameters of the creasing and laser cutting operations to control the speeds of the conveyor belts.

In such a way, the laser and creasing controllers execute the process on the fly and the process is synchronized with sheets movements by the encoders providing sheets positions in real time. The laser and creasing controllers adjust the process taking in account of rotation and translation of every sheet by dynamically modifying the calibration grids of the interpolated working axis.

The processing unit, elaborating a set of data including working parameters and also data related to the received sheet acquired by the optical station, can therefore assure that the conveyors of the laser module and of the creasing module work are at the same speed, which is a key aspect for the apparatus for sequentially creasing and laser cutting a sheet of carboard or the like according to the invention.

From the above, are clear the advantages of the present invention, which provides an all-in-one creasing and laser cutting apparatus for the packaging and carton display industry.

The apparatus and the method according to the present invention, indeed, allow a higher production capacity than apparatus known from the prior art. The vacuum conveyor belts allow to precisely process the material and the provision of an optical register allows to precisely set the operations on the specific sheet to be processed, resulting in a very fast creasing and laser die-cut even for complex geometries.

In addition, the prevision of a modular solution made up of different stations makes possible the integration with corporate workflow systems.

Of course, the invention is not limited to the particular embodiments previously described and illustrated in the annexed figures, but numerous detailed modifications can be made to it within the reach of the person skilled in the art, without thereby departing from the scope of the invention itself, as defined in the following claims.

## Claims

1. Apparatus (1) for creasing and cutting sheets of a material for packaging or display, or carton structures including paperboard, cardboard and corrugated cardboard, comprising:
- an optical station (100) provided with an optical station conveyor belt (110) adapted to receive a sheet Sₓ to be processed and to feed the sheet along the optical station, said optical station (100) also comprising an optical register designed to acquire parameters comprising workflow instructions of the received sheet optionally comprising X/Y offset positions, rotation angle and print deformations;
- a creasing module (200) provided downstream of the optical station (100) for carrying out creasing on the sheet Sₓ, said creasing module (200) being provided with a creasing controller receiving the parameters acquired at the optical station (100) and a creasing conveyor belt (210) adapted to receive the sheet Sₓ from the optical station conveyor belt (110) and to feed said sheet along the creasing module (200),
- a laser cutting module (300) provided downstream of the creasing module (200) for carrying out laser cutting on the sheet Sₓ exiting from the creasing module (200), said laser cutting module (300) being provided with a laser cutting controller receiving the parameters acquired at the optical station (100) and a laser cutting conveyor belt (310) adapted to receive the sheet Sₓ from the creasing module (200) and feed the sheet along the laser cutting module (300);
- a programmable logic controller (PLC) for controlling the operations of the optical station (100), the creasing module (200) and the laser cutting module (300);
- a processing unit operatively connected to the PLC controller, which receives as input a set of data including parameters related to creasing and cutting operations and values of speed of at least the creasing conveyor belt (210) and the laser cutting conveyor belt (310);
wherein said processing unit processes the set of input data and carries out a real-time control on the speeds of said creasing conveyor belt (210) and said cutting conveyor belt (310) according to said parameters related to creasing and laser cutting operations both at the creasing module (200) and at the laser cutting module (300), such as to control the speed of the creasing conveyor belt (210) and the laser cutting conveyor belt (310) in real time, according to said parameters related to the creasing and laser cutting operations.

2. Apparatus (1) according to claim 1, wherein said processing unit controls at least said creasing conveyor belt (210) and the laser cutting conveyor belt (310) and optionally said optical station conveyor belt (110), so that they are synchronized to move at the same speed, optionally to stop said conveyor belts.

3. Apparatus (1) according to claim 1 or 2, wherein said laser cutting module includes a laser device mounted on a laser plotter (301) capable of movement along two orthogonal axes and wherein said creasing module includes a creasing device mounted on a creasing plotter (201) capable of movement along two orthogonal axes, preferably said creasing device includes a rolling member suitable to apply pressure to said sheet.

4. Apparatus (1) according to any one of the preceding claims, wherein said optical register of said optical station (100) comprises one or more of a linear camera, a matrix camera, an optical scanner or optical sensors able to detect the sheet and/or the printed graphic position on it, or a combination thereof.

5. Apparatus (1) according to any one of the preceding claims, further comprising a digital library connected to the PLC or to an apparatus job controller for storing a plurality of files containing the workflow instructions for carrying out creasing and cutting processes on a specific sheet or stack of sheets to be processed, the files being also associated with a unique ID code, wherein said files are loaded by the PLC or by the job controller and the corresponding instructions are executed upon receiving of said ID code.

6. Apparatus (1) according to claim 5, wherein the optical station (100) further includes an optical reader or scanner configured to read a non-transitory machine-readable media embedded in a sheet to be processed, the machine-readable media storing one of said unique ID codes associated to a file containing workflow instructions.

7. Apparatus (1) according to claim 6, wherein said optical reader is QR-code scanner adapted to scan a machine-readable media in the form of a QR-code embedded in a sheet to be processed.

8. Apparatus (1) according to any one of claims 5 to 7, wherein said processing unit is configured to further receive the workflow instructions, which are processed together with the other input data for the control of the conveyor belt speeds.

9. Apparatus (1) according to any one of the preceding claims, further comprising a human machine interface (HMI) for manual input of data, parameters and/or instructions that are transmitted to the PLC and to the processing unit and processed for the control of conveyor belt speeds.

10. Apparatus (1) according to any one of the preceding claims, wherein the apparatus comprises two or more of said creasing modules and/or two or more of said laser cutting modules.

11. Apparatus (1) according to any one of the preceding claims, further comprising a feeder module (400) upstream of the optical station (100) for loading into the apparatus a sheet Sₓ from a plurality or stack (10) of sheets and/or a stacker module (500) downstream of the laser-cutting module (300) for collecting the processed sheet in a stack (20).

12. Apparatus (1) according to claim 11, wherein said processing unit operatively connected to the PLC controller, receives as input said set of data that further includes parameters related to the values of speed of said feeder module (400) and of said stacker module (500).

13. Method for performing sequential creasing and laser cutting on a sheet of material for packaging, display or corrugated carton structure such as cardboard and the like, comprising the steps of:
- at an optical station (100) provided with an optical station conveyor belt (110) adapted to receive a sheet Sₓ to be processed, acquiring by means of an optical register, parameters comprising workflow instructions of the received sheet Sₓ optionally comprising X/Y offset positions, rotation angle and print deformations;
- transmitting said acquired parameters to a Job Controller or to a PLC Controller;
- sending creasing instructions based on said acquired parameters to a creasing controller of a creasing module (200) provided downstream of said optical station (100) and provided with a creasing module conveyor belt (210) for performing creasing on the sheet Sₓ;
- sending cutting instructions based on said acquired parameters to a laser cutting controller of a laser cutting module (300) provided downstream of said creasing module and provided with a laser cutting module conveyor belt (310) for performing laser cutting on the sheet Sₓ;
- transmitting to a processing unit a set of data including speeds of at least the creasing and laser cutting conveyors (110, 210, 310) and the status of work and advancing process in real time;
- through the processing unit, setting the speeds of the optical station conveyor belt (110), the creasing module conveyor belt (210) and the laser cutting module conveyor belt (310) according to working parameters of at least the creasing module (200) and laser cutting module (300) and/or said status of work and advancing process in real time; and
- sending instructions to the creasing and laser cutting controllers in order to adjust the speed of said creasing conveyor belt and the laser cutting conveyor belt (310) in real time according to said set speeds.

14. A method according to claim 13, wherein said processing unit sets the speeds such that the optical station conveyor belt (110), the creasing conveyor belt (210) and the cutting conveyor belt (310) are synchronized to move at the same speed, optionally to stop said conveyor belts.

15. A method according to claim 13 or 14, further comprising the steps of:
- at the optical station (100), reading by means of a reader or scanner, a machine-readable code embedded in the sheet to be processed, said code being associated with a file containing the workflow instructions about the work to be performed on the sheet;
- transmitting said code to a Job controller which retrieves, through the code, an instruction file from a digital library containing a plurality of instruction files, to which it is connected; and
- loading the instructions and sending working profiles to the creasing controller and to the laser cutting controller.

16. A method according to claim 15, wherein the working profiles are received as input by the processing unit, which processes them together with other data for performing the real-time control.

17. A computer program comprising instructions to cause the apparatus of claim 1 to execute the steps of the method of claim 13.
